# EUROPEAN PATENT SPECIFICATION

(11) **EP 3 043 069 B1**
(45) Date of publication and mention of the grant of the patent: **13.01.2021**
(21) Application number: 14841598.7
(22) Date of filing: 11.03.2014
(51) Int. Cl.: F04B 39/00, B23K 26/21, F04B 39/12, F04C 29/00, H02K 1/12, F04C 18/356, F04C 23/00

(54) **COMPRESSOR**
VERDICHTER
COMPRESSEUR

(30) Priority: 05.09.2013 JP 2013183829; 19.09.2013 JP 2013193823; 24.09.2013 JP 2013196428; 10.10.2013 JP 2013212471; 31.10.2013 JP 2013226269
(43) Date of publication of application: 13.07.2016
(73) Proprietor: Panasonic Intellectual Property Management Co., Ltd., Osaka-shi, Osaka 540-6207 (JP)
(72) Inventor: FUKUDA, Akinori, Osaka-shi, 540-6207 (JP); HASE, Shozo, Osaka-shi, 540-6207 (JP); FUNAKOSHI, Daisuke, Osak-shi, 540-6207 (JP); HIRATSUKA, Takeshi, Osak-shi, 540-6207 (JP); KARINO, Tsuyoshi, Osaka-shi, 540-6207 (JP); TAKAO, Hitoshi, Osaka-shi, 540-6207 (JP); SUGIE, Toshihiro, Osaka-shi, 540-6207 (JP); KAWAHATA, Nobuyuki, Osaka-shi, 540-6207 (JP); YOSHIZUKA, Shinichi, Osaka-shi, 540-6207 (JP); SHIMIZU, Itsuo, Osaka-shi, 540-6207 (JP)
(74) Representative: Eisenführ Speiser
(86) International application number: PCT/JP2014/001376
(87) International publication number: WO 2015/033488

(56) References cited:
- JP-A- H05 227 685
- JP-A- 2001 304 123
- JP-A- 2007 268 609
- JP-A- 2010 011 645
- JP-A- 2010 011 645
- JP-A- 2010 023 048
- JP-A- 2010 041 851
- JP-A- 2010 041 851
- JP-A- 2011 050 151
- JP-A- 2011 050 151
- JP-A- 2011 055 576
- JP-A- 2013 162 676
- JP-U- S59 126 564

## Description

### [TECHNICAL FIELD]

The present invention relates to a compressor used for an air conditioner, a freezer, a blower and a water heater.

### [BACKGROUND TECHNIQUE]

Compressors are used in a freezer and an air conditioner. The compressor sucks working refrigerant which is evaporated by an evaporator, compresses the working refrigerant up to pressure which is necessary for condensing, and sends out the high temperature and high pressure working refrigerant in a working refrigerant circuit. According to such a compressor, a compressing mechanism for compressing refrigerant gas and an electric motor for driving the compressing mechanism are accommodated in a hermetic container. The electric motor is composed of a stator fixed to an inner wall surface of the hermetic container and a rotor for transmitting rotation power to a drive shaft.

Conventionally, a stator of an electric motor is adhered to and fixed to an inner wall of the hermetic container by shrink fitting. However, this method has a problem that the stator is deformed by contraction stress of the hermetic container and efficiency of the electric motor is deteriorated. That is, compression stress is applied to the stator, an electromagnetic steel sheet configuring the stator is distorted, magnetic field distortion is generated when the rotor rotates, and efficiency of the electric motor is deteriorated. Further, since vibration generated in the stator is transmitted to the hermetic container, vibration and noise of the compressor become a problem.

In recent years, from a standpoint of energy saving, there is proposed a DC IPM motor which is driven by DC. Further, from a standpoint of high-efficiency, it is proposed to thin an electromagnetic steel sheet which configures the stator. This DC motor can be operated at wide rotation number from several rpm to 6,000 or higher rpm, but since much current is made to flow at high speed operation and field-weakening control which generates torque is used, efficient deterioration caused by magnetic field distortion and increase in noise and vibration become more pronounced.

Hence, there is proposed a method to adhere and fix the stator to the hermetic container by laser welding (see patent document 1 for example). In patent document 1, the entire stator core is irradiated with laser in its axial direction.

### [PRIOR ART DOCUMENTS]

### [PATENT DOCUMENTS]

[PATENT DOCUMENT 1] Japanese Patent Application Laid-open No.S63-189685
[PATENT DOCUMENT 2] Japanese Patent Application 2011-050151 A
[PATENT DOCUMENT 3] Japanese Patent Application 2010-011645 A
[PATENT DOCUMENT 4] Japanese Patent Application 2011-055576 A
[PATENT DOCUMENT 5] Japanese Patent Application 2010-041851 A

Patent document 2 discloses an electric motor suitable for use in high temperature and high pressure states. A stator of the motor is formed of multiple laminated plate-like members . The outer circumferential surface of the stator is formed of a first outer circumferential surface and a second outer circumferential surface alternately placed along the circumferential direction as viewed from a section at a right angle to the axial direction. The multiple laminated magnetic steel sheets are coupled together in the axial direction by a weld at a coupling point in each coupling area sandwiched between boundary lines connecting the boundaries between a first outer circumferential surface and a second outer circumferential surface and the center of the stator. The stator is fixed on a housing by a weld in places where the boundary lines intersect with the housing in at least either of edges on both sides in the axial direction.

Moreover, patent document 3 describes a laminated iron core of a stator that is formed by laminating a plurality of stator cores one another. A plurality of welding beads formed along the outer peripheral surfaces of the respective stator cores are overlapped one another on the laminated iron core such that the overlapped welding beads disposed while being isolated from one another along the outer peripheral surfaces of the stator cores, and a plurality of grooves extending in the perpendicular direction are formed straddling over the whole plurality of the stator cores. A welding part is formed in each groove, and the stator cores are joined to each other at the welding part. The welding part extends astride only part of the plurality of the stator cores, and a welding non-formation part, not having the welding part, is formed in the groove. At least one boundary of the plurality of the stator cores is formed in the welding non-formation part.

Additionally, patent document 4 describes a compressor which has a cylindrical body casing and an electric motor. The electric motor has a stator fixed to the inside of the body casing, and a rotor which is rotatably arranged with respect to the stator. The stator has a protrusion which is partially thickened, and outwardly protrudes in the radial direction at its external peripheral face. The internal wall of the body casing and the protrusion at the external peripheral face of the stator are welded.

Furthermore, patent document 5 discloses a structure of fixing a stator in which a plurality of split cores each having a tooth portion used to wind an electric wire are circularly wound and a rotatable rotor is disposed in the inside thereof, and a cylindrical casing is disposed around the stator. The plurality of split cores are different in contact state from each other by being different in a fixed region by welding between the outer circumferential surface and the inner circumferential surface of the casing.

### [SUMMARY OF THE INVENTION]

### [PROBLEM TO BE SOLVED BY THE INVENTION]

When the entire stator core is irradiated with laser in its axial direction as in patent document 1, however, it is necessary to weld the hermetic container with the entire stator core, and it becomes difficult to adjust the laser irradiation time and heat quantity. It is also necessary to secure wide contact surfaces between the motor and the hermetic container so that the motor is not damaged by irradiation of laser. Further, since a thickness of the hermetic container cannot be thinned, design of the stator core is limited.

In the present invention, the stator is fixed to an inner wall of a housing by a plurality of laser welding portions, the plurality of laser welding portions are formed at predetermined distances from one another in a circumferential direction of the housing, and the laser welding portions are formed over a predetermined length.

### [MEANS FOR SOLVING THE PROBLEM]

To solve the conventional problem, the present invention provides a compressor as defined in claim 1 including, inter alia: an electric motor including a stator and a rotor placed on an inner side of the stator; a compressing mechanism; and a housing, wherein the stator is fixed to an inner wall of the housing through a plurality of laser welding portions, the plurality of laser welding portions are formed at predetermined distances from one another in a circumferential direction of the housing, and the laser welding portions are formed over predetermined lengths.

According to this, it is possible to enhance the efficiency of the electric motor, and to protect a covering material (heat insulating material, soundproofing material, heat storage material and the like) which covers an outer peripheral surface of the compressor.

### [EFFECT OF THE INVENTION]

According to the present invention, it is possible to prevent efficiency of the electric motor from being deteriorated by deformation of the stator. Further, according to the invention, since a swelling (projection) is not generating on the laser welding portion, it is possible to prevent, from being damaged, the covering material (heat insulating material, soundproofing material, heat storage material and the like) which covers the outer peripheral surface of the compressor.

### [BRIEF DESCRIPTION OF THE DRAWINGS]

Fig. 1 is a sectional view of a compressor according to an embodiment of the present invention;
Fig. 2 is a plan view of an electric motor according to the embodiment of the invention;
Fig. 3 is a diagram for explaining laser welding portions according to the embodiment of the invention;
Fig. 4 is a diagram showing a relation between the electric motor and a housing according to the embodiment of the invention;
Fig. 5 is a diagram for explaining laser welding portions according to a modification 1 of the invention;
Fig. 6 is a diagram for explaining laser welding portions according to a modification 2 of the invention;
Fig. 7 is a diagram for explaining a distance between the laser welding portions of the embodiment and the modification 2 of the invention; and
Fig. 8 is a photograph of a sectional view of essential portions of the compressor of the invention.

### [MODE FOR CARRYING OUT THE INVENTION]

According to a first invention as defined in claim 1, the stator is fixed to an inner wall of the housing through the plurality of laser welding portions, the plurality of laser welding portions are formed at predetermined distances from one another in a circumferential direction of the housing, and the laser welding portions are formed over a predetermined length.

According to this, it is possible to prevent the efficiency of the electric motor from being deteriorated by deformation of the stator. Further, since the laser welding portions have predetermined lengths, laser can be irradiated at relatively low temperature and low heat, and it is possible to prevent the stator from being deformed locally.

Moreover, a plurality of gaps which become refrigerant passages are formed in an outer peripheral surface of the yoke portion, and the laser welding portions are formed between the adjacent gaps and at locations on an outer side in a radial direction of the slots.

Since the laser welding portion is formed at an outside position in the radial direction of the slot, the gap which becomes the refrigerant passage can widely be formed in the outer peripheral surface of the yoke portion. Hence, it is possible to prevent efficiency of the electric motor from being deteriorated by the laser welding portion and the gap.

Additionally, refrigerant passage holes which become additional refrigerant passages are formed between the adjacent gaps and in the yoke portion located on an outer side in a radial direction of the teeth.

By forming the refrigerant passage hole which becomes the additional refrigerant passage in the yoke portion, the refrigerant passage hole can be formed in the yoke portion located outside of a radial direction of the teeth. Further, since the refrigerant passage hole can be formed, the gap can be narrowed, and it is possible to prevent the efficiency of the electric motor from being deteriorated.

According to a second invention which refers to the first invention, the laser welding portions are formed by fiber laser, and a light gathering point of the fiber laser is located on the stator.

Since the fiber laser is used, thermal influence at the time of welding is small, a light gathering point of the fiber laser is located on a stator instead of a boundary position between the housing and the stator, and it is possible to reliably weld in a small spot size.

According to a third invention which refers to the first or second invention, a concave portion is formed in an outer wall of the housing by forming the laser welding portions.

According to this, since a swelling (convex portion) is not generated on a laser welding point, it is possible to prevent the covering material (heat insulating material, soundproofing material and heat storage material) which covers the outer peripheral surface of the compressor from being damaged.

According to a fourth invention which refers to any of first to third inventions, a length of the laser welding portion is 10% or more and 90% or less of an axial length of the stator core, and the laser welding portion is formed at a position exceeding 5% length of the axial length of the stator core in the axial direction of the stator core from an end surface of the stator core.

If the length of the laser welding portion is less than 10% of the axial length of the stator core, welding strength becomes insufficient. If the length of the laser welding portion exceeds 90% of the axial length of the stator core or if the laser welding portion is formed at a position in a range of a 5% length of the axial length of the stator core in the axial direction of the stator core from an end surface of the stator core, there is fear that sparks generated when the stator and the housing are welded enter the housing from upper and lower ends of the stator core.

According to a fifth invention which refers to the fourth invention, the length of the laser welding portion is 10% or more and 20% or less of the axial length of the stator core.

If the length of the laser welding portion is 20% or less of the axial length of the stator core, an irradiation range of the laser can be reduced, and it is possible to effectively prevent the deformation of the stator generated at the time of welding.

According to a sixth invention which refers to any of the first to fifth inventions, the plurality of laser welding portions are formed into the same heights in an axial direction of the housing.

According to this, torque variation generated by the compressing mechanism and torque variation generated by rotation of the electric motor can evenly be dispersed by the plurality of laser welding portions.

According to a seventh invention which refers to any of the first to fifth inventions, the plurality of laser welding portions are formed into different heights in an axial direction of the housing.

According to this, distortion of a magnetic field generated when the motor rotates at high speed and axial vibration generated by a moment force of the rotation torque are held by the laser welding portions having different heights, and it is possible to suppress the distortion and vibration of the stator.

According to an eighth invention which refers to any of the first to seventh inventions, the laser welding portions are formed parallel to an axial direction of the housing.

According to this, since the lengths of the laser welding portions in the axial direction of the stator can be made long, it is possible to suppress the distortion and vibration of the stator.

According to a ninth invention which refers to any of the first to eighth inventions, the laser welding portions incline with respect to an axial direction of the housing.

According to this, the welding range can be widened in the circumferential direction of the housing, torque variation received by the stator at the time of compression and torque variation generated by the rotation of the electric motor can evenly be dispersed and held by the plurality of welded portions.

According to a tenth invention which refers to the ninth invention, a first laser welding portion and a second laser welding portion placed adjacent to the first laser welding portion in the circumferential direction incline with respect to the axial direction of the housing in opposite directions with from each other.

According to this, a distance between the adjacent laser welding portions can be shortened partially, and rigidity of the housing in its circumferential direction can be enhanced. Further, since the welding can be carried out while rotating the housing, time required for the welding can be shortened.

According to an eleventh invention which refers to the tenth invention, a fourth laser welding portion is formed at a position at a 180° interval from an arbitrary third laser welding portion of the plurality of laser welding portions in the circumferential direction.

According to this, distortion caused by the laser welding in the outer peripheral direction can be canceled.

According to a twelfth invention which refers to the first invention, a width of the laser welding portion is two times or more of a thickness of the electromagnetic steel sheet.

According to this, it is possible to suppress a melting depth into the stator and to prevent the efficiency of the electric motor from being deteriorated.

According to a thirteenth invention which refers to any of the first to twelfth inventions, the laser welding portions are formed after the stator is transition-fitted into the housing.

Since a gap between the housing and the stator can be eliminated by the transition fit, it is possible to reliably weld by the laser welding portion.

An embodiment of the present invention will be explained with reference to the drawings.

### (Embodiment)

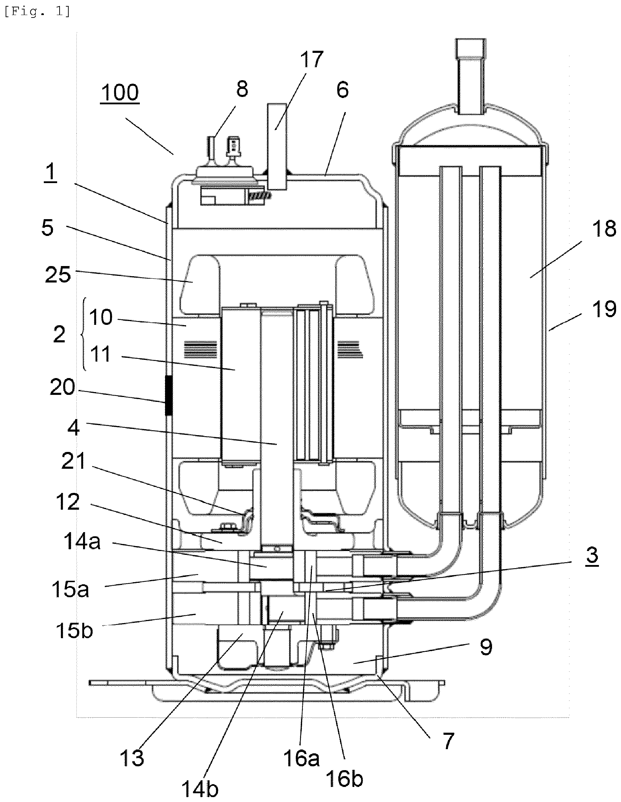

Fig. 1 is a vertical sectional view of a compressor 100 of an embodiment of the invention. The compressor 100 includes a hermetic container 1, an electric motor 2, a compressing mechanism 3 and a drive shaft 4. The hermetic container 1 is composed of a cylindrical housing 5, and an upper cover 6 and a lower cover 7 which close openings of the housing 5. The compressing mechanism 3 is placed in a lower portion of the housing 5. The electric motor 2 is placed on the compressing mechanism 3 in the housing 5. The compressing mechanism 3 and the electric motor 2 are connected to each other through the drive shaft 4. The upper cover 6 is provided with a terminal 8 for supplying electricity to the electric motor 2. An oil reservoir 9 is formed in a bottom of the hermetic container 1 for reserving lubricating oil. The electric motor 2 is composed of a stator 10 and a rotor 11. The stator 10 is fixed to an inner wall of the housing 5. The rotor 11 is fixed to the drive shaft 4 and rotates together with the drive shaft 4. Both ends of the drive shaft 4 are rotatably supported by an upper bearing member 12 and a lower bearing member 13.

If the electric motor 2 is biased and the drive shaft 4 rotates, drive shaft eccentric portions 14a, 14b eccentrically rotate in cylinders 15a, 15b, respectively, and rolling pistons 16a, 16b rotate while abutting against a vane (not shown). In both the cylinders 15a, 15b, suction and compression operations of refrigerant gas are repeated with periods which are deviated from each other by half-rotation. The compressing mechanism 3 is composed of the upper bearing member 12, the lower bearing member 13, the cylinders 15a, 15b, the rolling pistons 16a, 16b and the vane (not shown).

A discharge pipe 17 is provided on an upper portion of the hermetic container 1. The discharge pipe 17 penetrates an upper portion of the upper cover 6, and opens toward an inner space of the hermetic container 1. The discharge pipe 17 functions as a discharge flow path which guides refrigerant gas compressed by the compressing mechanism 3 into outside of the hermetic container 1. When the compressor 100 operates, the inner space of the hermetic container 1 is filled with compressed refrigerant.

An accumulator 18 is provided to prevent liquid compression of the compressor 100. The accumulator 18 separates refrigerant gas into gas and liquid before refrigerant gas is directly sucked into the compressor 100. The accumulator 18 is composed of a cylindrical case 19, a refrigerant gas introduction pipe connected to an upper portion of the case 19, and two refrigerant gas discharge pipes connected to a lower portion of the case 19.

It is preferable that HFC refrigerant R32 is used as refrigerant which is compressed by the compressing mechanism 3. If HFC refrigerant R32 is used, a refrigerant circulation amount is increased by about 10% as compared with conventional alternative refrigerant, and even if load torque increases, efficiency is not lowered, and it is possible to suppress noise and vibration of the electric motor 2.

In the compressor 100 configured as described above, the stator 10 of the electric motor 2 and the housing 5 are welded and fixed to each other by laser irradiation of a fiber laser.

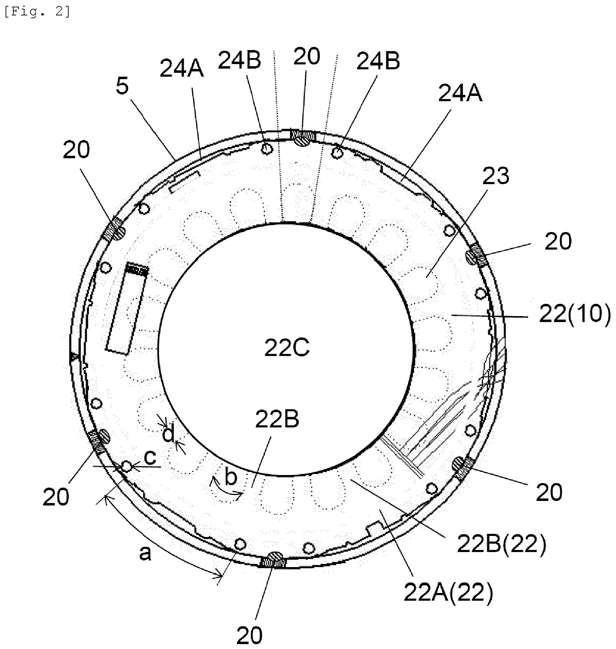

Fig. 2 is a plan view of the electric motor 2 according to the embodiment of the present invention.

A DC IPM motor in which a winding wire is distributed-wound is suitable as the electric motor 2 as shown in Fig. 2. The electric motor 2 is composed of the stator 10 fixed to an inner wall surface of the housing 5 and the rotor 11 which transmits rotation power to a shaft.

The stator 10 includes a stator core 22 and a winding wire 25.

The stator core 22 is formed by laminating a plurality of electromagnetic steel sheets made of metal on one another.

The stator core 22 includes an annular yoke portion 22A, teeth 22B projecting radially inward from the yoke portion 22A, slots 23 formed between adjacent teeth 22B, and a through hole 22C formed at the inner side of the teeth 22B and in which the rotor 11 is placed. Insulating paper (not shown) is inserted into the slots 23 to secure insulation with respect to the winding wire 25.

An outer periphery of the stator 10, i.e., an outer peripheral surface of the yoke portion 22A is provided with a plurality of gaps 24A which become refrigerant passages. In each of the gaps 24A, a width clearance a in a circumferential direction of the yoke portion 22A is greater than a depth clearance in a radial direction of the yoke portion 22A. It is preferable that the width clearance a in the gap 24a is wider than a width b in a circumferential direction of one slot 23, and the width clearance a is two time or more of the width b in a circumferential direction of the slot 23. If the width clearance a in the gap 24A is widened, even if the depth clearance is made small, the refrigerant passage can be secured, and it is possible to prevent the efficiency of the electric motor 2 from being lowered. The gaps 24A penetrate the electric motor 2 in its axial direction, and bring an upper space and a lower space of the electric motor 2 into communication with each other.

Refrigerant passage holes 24B which become additional refrigerant passages are formed between the adjacent gaps 24A and in the outer yoke portion 22A in the radial direction of the teeth 22B. A diameter c of each of the refrigerant passage holes 24B is smaller than a minimum width d of the tooth 22B. By making the diameter c of the refrigerant passage hole 24B smaller than the minimum width d of the tooth 22B in this manner, the refrigerant passage can be secured, and it is possible to prevent the efficiency of the electric motor 2 from being deteriorated. The refrigerant passage holes 24B penetrate the electric motor 2 in the axial direction, and bring the upper space and the lower space of the electric motor 2 into communication with each other.

Refrigerant which is compressed by the compressing mechanism 3 and discharged from an opening of a muffler cover 21 is guided into an upper space of the hermetic container 1 through the gaps 24A of the stator 10, the gaps (not shown) of the rotor 11, and the refrigerant passage holes 24B.

The stator 10 and the housing 5 are fixed to each other through the six laser welding portions 20.

Each of the laser welding portions 20 is formed between the adjacent gaps 24A and at a location outside in the radial direction of the slot 23. The laser welding portion 20 is formed such that a light gathering point of the fiber laser is located at the stator 10. If the fiber laser is used, thermal influence at the time of welding is small. If the light gathering point of the fiber laser is located at the stator 10 instead of the boundary position between the housing 5 and the stator 10, it is possible to reliably weld in a small spot size.

According to conventional spot welding, since it is necessary to fill a welding hole with welding material such as brazing, a swelling (convex portion) is generated on the welding portion. Whereas, in this embodiment, since the laser welding is used, a swelling (convex portion) is not generated on the welding portion, and a concave portion is formed in an outer wall of the housing 5 by forming the laser welding portions 20. According to this, it is possible to prevent covering material (heat insulating material, soundproofing material and heat storage material) which covers the outer peripheral surface of the compressor 100 from being damaged.

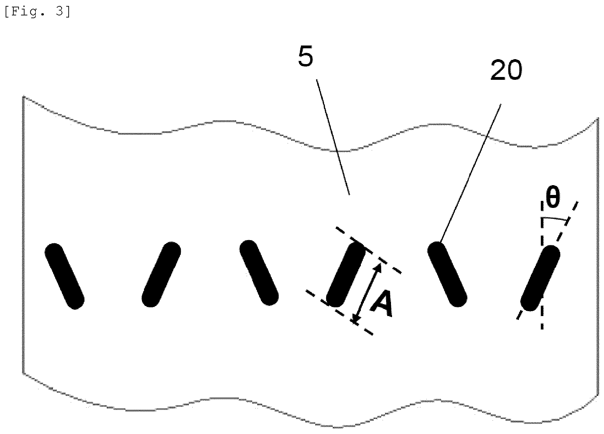

Fig. 3 (development diagram of housing 5) is for explaining the laser welding portions 20 of the embodiment. The laser welding portions 20 are formed at predetermined distances from one another in the circumferential direction of the housing 5. The six laser welding portions 20 are provided in this embodiment. The distances between the laser welding portions 20 need not be the same, and may be different from each other. A length, placement and inclination of the laser welding portion 20 will be described below in detail.

It is preferable that a width of the laser welding portion 20 is two times or more of a thickness of the electromagnetic steel sheet. By making the width of the laser welding portion 20 two times or more of the thickness of the electromagnetic steel sheet, it is possible to suppress the melting depth into the stator 10 and to prevent the efficiency of the electric motor 2 from being deteriorated. An appropriate width of the laser welding portion 20 is 0.5 mm to 3 mm for example.

### <Length>

Each of the laser welding portions 20 in the embodiment is formed over a predetermined length in the axial direction of the housing 5. That is, the laser welding portion 20 is of a line shape. If the laser welding portion 20 is formed by points like the welding point of conventional spot welding, since it is necessary to locally emit high heat laser, and local distortion in the stator 10 becomes large. In this embodiment, since the laser welding portion 20 has the predetermined length, it is possible to emit laser at relatively low temperature and low heat, and it is possible to prevent the stator 10 from locally deforming.

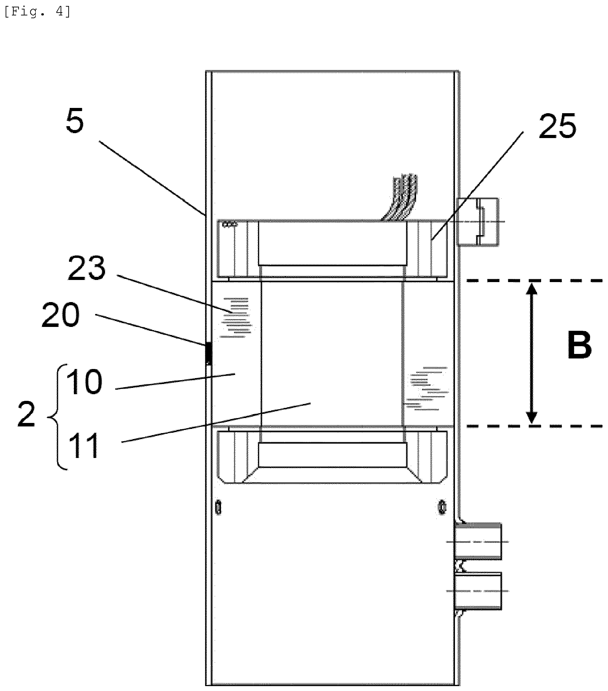

Fig. 4 shows a relation between the electric motor 2 and the housing 5 in the embodiment. When a length of the laser welding portion 20 is defined as A (see Fig. 3) and an axial length of the stator core 22 is defined as B (see Fig. 4), it is preferable that A is 10% or more and 90% or less of B.

The laser welding portion 20 is formed at a position exceeding 5% length of the axial length B of the stator core 22 in the axial direction of the stator core 22 from an end surface of the stator core 22.

If the length A of the laser welding portion 20 becomes smaller than 10% of the axial length B of the stator core 22, welding strength becomes insufficient.

If the length A of the laser welding portion 20 exceeds 90% of the axial length B of the stator core 22, or if the laser welding portion 20 is formed at a position within a range of 5% length of the axial length B of the stator core 22 in the axial direction of the stator core 22 from the end surface of the stator core 22, there is fear that sparks generated when the stator 10 and the housing 5 are welded enter the housing 5 from upper and lower ends of the stator core 22.

It is preferable that the length A of the laser welding portion 20 is 10% or more and 20% or less of the axial length B of the stator core 22. If the length A is 20% or less of the axial length B, the welding range can be made smaller, and deformation of the stator 10 generated at the time of laser welding can effectively be prevented.

As one example, the length of the laser welding portion 20 is practically about 10 to 20 mm and the length of the stator core 22 is practically about 60 mm. The length of the laser welding portion 20 means a welding distance. When the laser welding portion 20 inclines, the length of the laser welding portion 20 is A shown in Fig. 3.

It is unnecessary that all of the plurality of laser welding portions 20 have the same lengths, and a laser welding portion 20 having a different length may be included. When all of the plurality of laser welding portions 20 have the same lengths, torque in the circumferential direction is dispersed at the same height. Hence, rotation torque generated in the stator 10 is not received as a moment force in the axial direction, and it is possible to suppress the vibration of the stator 10.

### <Placement 1>

The laser welding portions 20 of the embodiment are formed into the same heights in the axial direction of the housing 5. According to this, torque variation generated by the compressing mechanism 3 and torque variation generated by the rotation of the electric motor 2 are evenly dispersed and held by the plurality of laser welding portions 20. The expression "the same heights" does not always means "strictly the same", and also includes "slightly deviated heights" within a range exerting the above-described working effect. The expression that "formed into the same heights in the axial direction of the housing 5" can be replaced by expression that "a starting point of the laser welding in the housing 5 is formed into the same heights".

### (Modification 1)

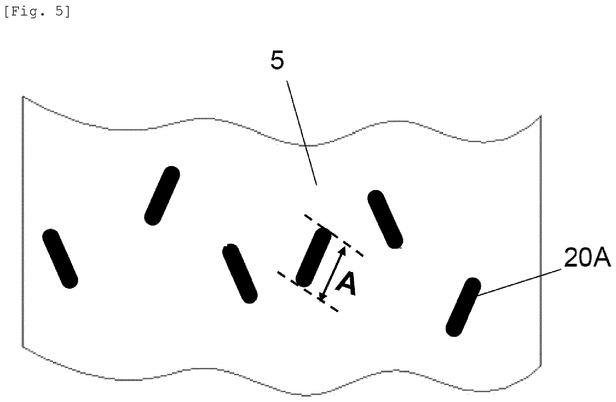

A modification 1 of the laser welding portions 20 of the embodiment is shown in Fig. 5. In this modification, the plurality of laser welding portions 20A are formed into different heights in the axial direction of the housing 5. According to this configuration, distortion of the magnetic field generated when the electric motor 2 rotates at high speed and vibration in the axial direction generated by the moment force of the rotation torque are held by the laser welding portions 20A having the different heights. According to this, it is possible to suppress the distortion and the vibration of the stator 10.

### <Placement 2>

The plurality of laser welding portions 20 are formed, and they are formed at positions at 180° intervals from each other in the circumferential direction. According to this, distortion in the outer peripheral direction by the laser welding can be offset.

### <Inclination>

The laser welding portion 20 in this embodiment inclines with respect to the axial direction of the housing 5. According to this, it is possible to widen the welding range with respect to the circumferential direction of the housing 5, and torque variation received by the stator 10 at the time of compression and torque variation generated by the rotation of the electric motor 2 can evenly be dispersed and held by the plurality of laser welding portions 20. The inclination θ of the laser welding portion 20 is practically in a range from 10° or more to 30° or less with respect to the axial direction of the housing 5. It is unnecessary that all of the six laser welding portions 20 are inclined.

It is preferable that the adjacent laser welding portions 20 are inclined in opposite directions with respect to the axial direction of the housing 5. A reason thereof will be described in detail later, but a distance between ends of the adjacent laser welding portions 20 can be shortened, and rigidity in the circumferential direction of the housing 5 can be enhanced. Further, since it is possible to weld while rotating the housing 5, time required for welding can be shortened.

### (Modification 2)

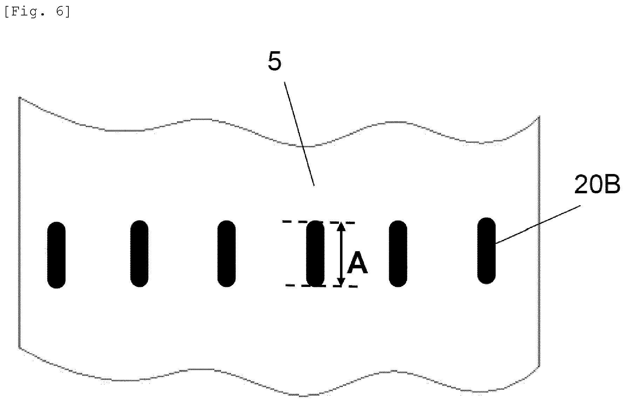

A modification 2 of the laser welding portions 20 of this embodiment will be shown in Fig. 6. In this embodiment, a plurality of laser welding portions 20B are formed parallel to the axial direction of the housing 5. According to this configuration, since the laser welding portions 20B can be made long in the axial direction of the stator 10, it is possible to suppress the distortion and vibration of the stator 10.

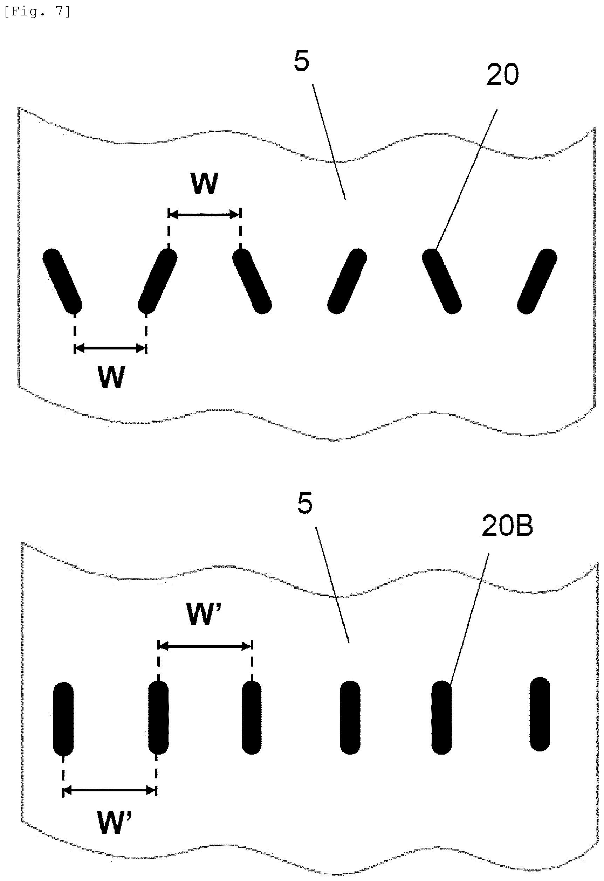

Distances between ends of the laser welding portions 20 of the embodiment and the laser welding portions 20B of the modification 2 will be described below. Figs. 7 are for explaining the distances between the ends of the laser welding portions 20 and 20B of the embodiment and the modification 2 of the present invention. Distances (W) between the ends of the laser welding portions 20 in the embodiment are shorter than the distances (W') between the ends of the laser welding portions 20B of the modification 2 (W<W'). According to this, in the embodiment, it is possible to enhance the rigidity in the circumferential direction of the housing 5.

Further exemplary compressors not part of the present invention can be derived from the present disclosure.

Although six laser welding portions 20 are formed in the embodiment, the number of the laser welding portions 20 is not limited to six. It is only necessary that the plurality of laser welding portions are formed.

(4) Although the stator 10 and the housing 5 are fixed to each other through laser welding in the embodiment, the electric motor 2 may first be inserted into the cylindrical housing 5 through shrink fit, a clearance size between the stator 10 and the rotor 11 is determined and then, the stator 10 and the housing 5 may be welded and fixed to each other through laser welding.

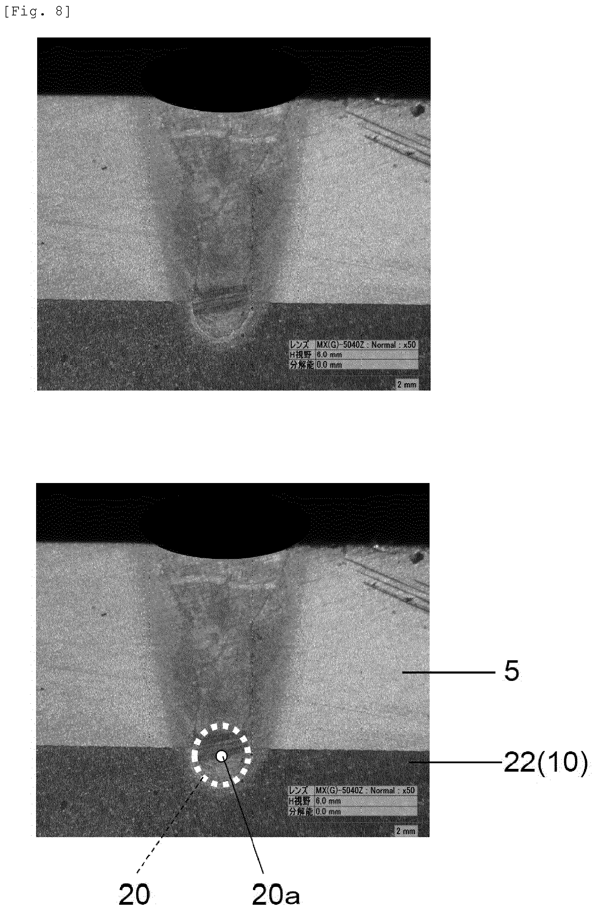

Fig. 8 is a photograph of a sectional view of essential portions of the compressor 100 of the present invention.

Fig. 8 shows the laser welding portion 20 formed through fiber laser.

As shown in Fig. 8, the laser welding portion 20 is formed astride the housing 5 and the stator 10 such that a light gathering point 20a of the fiber laser is located at the stator 10 instead of a boundary position between the housing 5 and the stator 10.

A concave portion is formed in an outer wall of the housing 5 irradiated with fiber laser.

If the light gathering point 20a of fiber laser is located at the boundary position between the housing 5 and the stator 10, when a clearance is generated between the housing 5 and the stator 10, there is a possibility that welding of the fiber laser becomes insufficient because the spot size is small. On the other hand, if the light gathering point 20a of fiber laser is located at the stator 10, even if a clearance is generated between the housing 5 and the stator 10, the stator 10 is melted and the clearance is filled and the stator 10 is welded to the housing 5.

To prevent a clearance from being generated between the housing 5 and the stator 10, it is preferable that the stator 10 is transition-fitted into the housing 5 before the laser welding portions 20 are formed. By previously eliminating the clearance between the housing 5 and the stator 10 by transition fit, it is possible to reliably weld by the laser welding portions 20.

### [INDUSTRIAL APPLICABILITY]

According to the compressor of the present invention, it is possible to enhance the efficiency of the compressor by preventing deformation and distortion of the electric motor. According to this, the present disclosure can be applied not only to the air conditioner compressor but also to a heat pump water heater.

### [EXPLANATION OF SYMBOLS]

- 1: hermetic container
- 2: electric motor
- 3: compressing mechanism
- 4: drive shaft
- 5: housing
- 6: upper cover
- 7: lower cover
- 8: terminal
- 9: oil reservoir
- 10: stator
- 11: rotor
- 12: upper bearing member
- 13: lower bearing member
- 14: drive shaft eccentric portion
- 15: cylinder
- 16: rolling piston
- 17: discharge pipe
- 18: accumulator
- 19: case
- 20: laser welding portions
- 20a: light gathering point
- 21: muffler cover
- 22: stator core
- 22A: yoke portion
- 22B: teeth
- 23: slots
- 24A: gaps
- 24B: refrigerant passage hole
- 25: winding wire
- 100: compressor

## Claims

1. A compressor comprising: an electric motor (2) including a stator (10) and a rotor (11) placed on an inner side of the stator (10); a compressing mechanism (3); and a housing (5), wherein
the stator (10) is fixed to an inner wall of the housing (5) through a plurality of laser welding portions (20),
the plurality of laser welding portions are formed at predetermined distances from one another in a circumferential direction of the housing (5),
the laser welding portions (20) are formed over predetermined lengths,
the stator (10) includes a stator core (22) and a winding wire (25),
the stator core (22) is formed by laminating a plurality of metal electromagnetic steel sheets on one another,
the stator core (22) includes an annular yoke portion (22A), teeth (22B) projecting inward in a radial direction of the yoke portion from the yoke portion (22A), and slots (23) formed between the adjacent teeth (22B),
a plurality of gaps (24A) which become refrigerant passages are formed in an outer peripheral surface of the yoke portion (22A), and
the laser welding portions (20) are formed between the adjacent gaps (24A),
**characterized in**
**that** the laser welding portions (20) are further formed at locations on an outer side in a radial direction of the slots (23), and
**that** refrigerant passage holes (24B) which become additional refrigerant passages are formed between the adjacent gaps (24A) and in the yoke portion (22A) located on an outer side in a radial direction of the teeth (22B).

2. The compressor according to claim 1, wherein
the laser welding portions (20) are formed by fiber laser, and
a light gathering point (20a) of the fiber laser is located on the stator (10).

3. The compressor according to claim 1 or 2, wherein
a concave portion is formed in an outer wall of the housing (5) by forming the laser welding portions (20).

4. The compressor according to any one of claims 1 to 3, wherein
a length of the laser welding portion (20) is 10% or more and 90% or less of an axial length of the stator core (22), and
the laser welding portion (20) is formed at a position exceeding 5% length of the axial length of the stator core (22) in the axial direction of the stator core (22) from an end surface of the stator core (22).

5. The compressor according to claim 4, wherein
the length of the laser welding portion (20) is 10% or more and 20% or less of the axial length of the stator core (22).

6. The compressor according to any one of claims 1 to 5, wherein
the plurality of laser welding portions (20) are formed into the same heights in an axial direction of the housing (5).

7. The compressor according to any one of claims 1 to 5, wherein
the plurality of laser welding portions (20) are formed into different heights in an axial direction of the housing (5).

8. The compressor according to any one of claims 1 to 7, wherein
the laser welding portions (20) are formed parallel to an axial direction of the housing (5).

9. The compressor according to any one of claims 1 to 8, wherein
the laser welding portions (20) incline with respect to an axial direction of the housing (5).

10. The compressor according to claim 9, wherein
a first laser welding portion (20) and a second laser welding portion (20) placed adjacent to the first laser welding portion (20) in the circumferential direction incline with respect to the axial direction of the housing (5) in opposite directions with from each other.

11. The compressor according to claim 10, wherein
a fourth laser welding portion (20) is formed at a position at a 180° interval from an arbitrary third laser welding portion (20) of the plurality of laser welding portions (20) in the circumferential direction.

12. The compressor according to claim 1, wherein
a width of the laser welding portion (20) is two times or more of a thickness of one of the electromagnetic steel sheet.

13. The compressor according to any one of claims 1 to 12, wherein
the laser welding portions (20) are formed after the stator (10) is transition-fitted into the housing (5).

## Patentansprüche

1. Kompressor, umfassend: einen Elektromotor (2), der einen Stator (10) und einen auf einer Innenseite des Stators (10) angeordneten Rotor (11); einen Kompressionsmechanismus (3); und ein Gehäuse (5) enthält, wobei
der Stator (10) an einer Innenwand des Gehäuses (5) durch eine Vielzahl von Laserschweißabschnitten (20) befestigt ist,
die Vielzahl von Laserschweißabschnitten in vorbestimmten Abständen voneinander in einer Umfangsrichtung des Gehäuses (5) ausgebildet sind,
die Laserschweißabschnitte (20) über vorbestimmte Längen ausgebildet sind,
der Stator (10) einen Statorkern (22) und einen Wicklungsdraht (25) umfasst,
der Statorkern (22) durch Laminieren einer Vielzahl von metallischen elektromagnetischen Stahlblechen gebildet ist,
der Statorkern (22) einen ringförmigen Jochabschnitt (22A), Zähne (22B), die in einer radialen Richtung des Jochabschnitts von dem Jochabschnitt (22A) nach innen vorstehen, und Schlitze (23), die zwischen den benachbarten Zähnen (22B) ausgebildet sind, aufweist,
eine Vielzahl von Spalten (24A), die zu Kältemitteldurchgängen werden, in einer äußeren Umfangsfläche des Jochabschnitts (22A) ausgebildet sind, und
die Laserschweißabschnitte (20) zwischen den benachbarten Spalten (24A) ausgebildet sind,
**dadurch gekennzeichnet,**
**dass** die Laserschweißabschnitte (20) ferner an Stellen auf einer Außenseite in radialer Richtung der Schlitze (23) ausgebildet sind, und
**dass** Kältemitteldurchgangslöcher (24B), die zu zusätzlichen Kältemitteldurchgängen werden, zwischen den benachbarten Spalten (24A) und in dem Jochabschnitt (22A), der sich auf einer Außenseite in radialer Richtung der Zähne (22B) befindet, ausgebildet sind.

2. Kompressor nach Anspruch 1, wobei
die Laserschweißabschnitte (20) durch Faserlaser ausgebildet sind, wobei
ein Lichtsammelpunkt (20a) des Faserlasers auf dem Stator (10) angeordnet ist.

3. Kompressor nach Anspruch 1 oder 2, wobei
durch Ausbilden der Laserschweißabschnitte (20) ein konkaver Abschnitt in einer Außenwand des Gehäuses (5) ausgebildet ist.

4. Kompressor nach einem der Ansprüche 1 bis 3, wobei
eine Länge des Laserschweißabschnitts (20) 10% oder mehr und 90% oder weniger der axialen Länge des Statorkerns (22) beträgt, und
der Laserschweißabschnitt (20) an einer Position ausgebildet ist, die in der axialen Richtung des Statorkerns (22) von einer Endfläche des Statorkerns (22) aus 5% der axialen Länge des Statorkerns (22) überschreitet.

5. Kompressor nach Anspruch 4, wobei
die Länge des Laserschweißabschnitts (20) 10% oder mehr und 20% oder weniger der axialen Länge des Statorkerns (22) beträgt.

6. Kompressor nach einem der Ansprüche 1 bis 5, wobei
die Vielzahl der Laserschweißabschnitte (20) in den gleichen Höhen in einer axialen Richtung des Gehäuses (5) ausgebildet sind.

7. Kompressor nach einem der Ansprüche 1 bis 5, wobei
die Vielzahl von Laserschweißabschnitten (20) in unterschiedliche Höhen in einer axialen Richtung des Gehäuses (5) ausgebildet sind.

8. Kompressor nach einem der Ansprüche 1 bis 7, wobei
die Laserschweißabschnitte (20) parallel zu einer axialen Richtung des Gehäuses (5) ausgebildet sind.

9. Kompressor nach einem der Ansprüche 1 bis 8, wobei
die Laserschweißabschnitte (20) in Bezug auf eine axiale Richtung des Gehäuses (5) geneigt sind.

10. Kompressor nach Anspruch 9, wobei
ein erster Laserschweißabschnitt (20) und ein zweiter Laserschweißabschnitt (20), der in der Umfangsrichtung benachbart zu dem ersten Laserschweißabschnitt (20) angeordnet ist, sich in Bezug auf die axiale Richtung des Gehäuses (5) in entgegengesetzten Richtungen zueinander neigen.

11. Kompressor nach Anspruch 10, wobei
ein vierter Laserschweißabschnitt (20) an einer Position in einem 180°-Abstand von einem beliebigen dritten Laserschweißabschnitt (20) der Vielzahl von Laserschweißabschnitten (20) in der Umfangsrichtung ausgebildet ist.

12. Kompressor nach Anspruch 1, wobei
eine Breite des Laserschweißabschnitts (20) das Zweifache oder mehr einer Dicke von einem der elektromagnetischen Stahlbleche beträgt.

13. Kompressor nach einem der Ansprüche 1 bis 12, wobei
die Laserschweißabschnitte (20) ausgebildet worden sind, nachdem der Stator (10) mit einer Übergangspassung in das Gehäuse (5) eingepasst wurde.

## Revendications

1. Compresseur comprenant : un moteur électrique (2) incluant un stator (10) et un rotor (11) placé sur un côté interne du stator (10) ; un mécanisme de compression (3) ; et un carter (5),
le stator (10) étant fixé à une paroi interne du carter (5) par l'intermédiaire d'une pluralité de parties de soudage au laser (20),
la pluralité de parties de soudage au laser étant formées à des distances prédéterminées les unes des autres dans une direction circonférentielle du carter (5),
les parties de soudage au laser (20) étant formées sur des longueurs prédéterminées,
le stator (10) comprenant un noyau de stator (22) et un fil d'enroulement (25),
le noyau de stator (22) étant formé par stratification d'une pluralité de tôles en acier électromagnétiques métalliques les unes sur les autres,
le noyau de stator (22) incluant une partie culasse annulaire (22A), des dents (22B) faisant saillie vers l'intérieur dans une direction radiale de la partie culasse à partir de la partie culasse (22A) et des fentes (23) formées entre les dents adjacentes (22B),
une pluralité d'interstices (24A) qui deviennent des passages à fluide frigorigène étant formés dans une surface périphérique externe de la partie culasse (22A) et
les parties de soudage au laser (20) étant formées entre les interstices adjacents (24A),
**caractérisé en ce que**
les parties de soudage au laser (20) sont en outre formées en des emplacements sur un côté externe dans une direction radiale des fentes (23) et
des trous de passage à fluide frigorigène (24B) qui deviennent des passages à fluide frigorigène supplémentaires sont formés entre les interstices adjacents (24A) et dans la partie culasse (22A) située sur un côté externe dans une direction radiale des dents (22B).

2. Compresseur selon la revendication 1, dans lequel
les parties de soudage au laser (20) sont formées par un laser à fibre et
un point de collecte de lumière (20a) du laser à fibre est situé sur le stator (10).

3. Compresseur selon la revendication 1 ou 2, dans lequel
une partie concave est formée dans une paroi extérieure du carter (5) par la formation des parties de soudage au laser (20).

4. Compresseur selon l'une quelconque des revendications 1 à 3, dans lequel
une longueur de la partie de soudage au laser (20) est supérieure ou égale à 10% et inférieure ou égale à 90% d'une longueur axiale du noyau de stator (22) et
la partie de soudage au laser (20) est formée en une position au-delà de 5% de longueur de la longueur axiale du noyau de stator (22) dans la direction axiale du noyau de stator (22) à partir d'une surface d'extrémité du noyau de stator (22).

5. Compresseur selon la revendication 4, dans lequel
la longueur de la partie de soudage au laser (20) est supérieure ou égale à 10% et inférieure ou égale à 20% de la longueur axiale du noyau de stator (22).

6. Compresseur selon l'une quelconque des revendications 1 à 5, dans lequel
la pluralité de parties de soudage au laser (20) sont formées à des hauteurs identiques dans une direction axiale du carter (5).

7. Compresseur selon l'une quelconque des revendications 1 à 5, dans lequel
la pluralité de parties de soudage au laser (20) sont formées à des hauteurs différentes dans une direction axiale du carter (5).

8. Compresseur selon l'une quelconque des revendications 1 à 7, dans lequel
les parties de soudage au laser (20) sont formées parallèlement à une direction axiale du carter (5).

9. Compresseur selon l'une quelconque des revendications 1 à 8, dans lequel
les parties de soudage au laser (20) s'inclinent par rapport à une direction axiale du carter (5).

10. Compresseur selon la revendication 9, dans lequel
une première partie de soudage au laser (20) et une deuxième partie de soudage au laser (20) placée à côté de la première partie de soudage au laser (20) dans la direction circonférentielle s'inclinent par rapport à la direction axiale du carter (5) dans des directions opposées l'une par rapport à l'autre.

11. Compresseur selon la revendication 10, dans lequel
une quatrième partie de soudage au laser (20) est formée en une position à un intervalle de 180° à partir d'une troisième partie de soudage au laser arbitraire (20) de la pluralité de parties de soudage au laser (20) dans la direction circonférentielle.

12. Compresseur selon la revendication 1, dans lequel
une largeur de la partie de soudage au laser (20) représente deux fois, ou plus, d'une épaisseur de l'une des tôles en acier électromagnétiques.

13. Compresseur selon l'une quelconque des revendications 1 à 12, dans lequel
les parties de soudage au laser (20) sont formées après un ajustement transitoire du stator (10) dans le carter (5).
